(19) Europäisches Patentamt
European Patent Office
Office européen des brevets

(11) EP 3 086 613 A1

(12) EUROPEAN PATENT APPLICATION
published in accordance with Art. 153(4) EPC

(43) Date of publication:
26.10.2016 Bulletin 2016/43

(51) Int Cl.:
*H04W 72/04* (2009.01)

(21) Application number: 14872198.8

(22) Date of filing: 22.05.2014

(86) International application number:
PCT/CN2014/078172

(87) International publication number:
WO 2015/089994 (25.06.2015 Gazette 2015/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.12.2013 CN 201310693382

(71) Applicant: ZTE Corporation
Shenzhen, Guangdong 518057 (CN)

(72) Inventors:
• LI, Jun
Shenzhen
Guangdong 518057 (CN)

• WANG, Guozheng
Shenzhen
Guangdong 518057 (CN)
• LOU, Hongwei
Shenzhen
Guangdong 518057 (CN)

(74) Representative: Schröer, Gernot H.
Meissner Bolte Patentanwälte
Rechtsanwälte Partnerschaft mbB
Bankgasse 3
90402 Nürnberg (DE)

(54) METHOD AND DEVICE FOR PROCESSING ABS IN LTE HETEROGENEOUS NETWORK

(57) A method and device for processing an ABS in an LTE heterogeneous network are provided in the embodiments of the present invention. The method includes: determining a system frame number deviation between a present base station and a base station configuring the ABS; and adjusting an ABS effective time issued by the base station configuring the ABS according to the system frame number deviation. Through the embodiments of the present invention, ABS synchronization of a macro base station and a micro base station can be realized.

A base station receiving the ABS determines an SFN deviation between the base station receiving the ABS and a base station configuring the ABS — 11

The base station receiving the ABS adjusts an ABS effective time issued by the base station configuring the ABS according to the SFN deviation — 12

FIG. 1

EP 3 086 613 A1

**Description**

Technical Field

The present invention relates to the field of mobile communication technology, and especially, to a method and device for processing an ABS in a Long Term Evolution (LTE) heterogeneous network.

Background of the Related Art

In order to meet the user demands of seamless coverage and higher data rate services, the next generation broadband wireless communication system takes a higher data rate, a higher utilization ratio of frequency spectrum and power, cellular average throughput enhancement and edge user performance improvement as the main system design requirements. The long term evolution LTE project is the largest new technology research and development project initiated by the 3rd Generation Partnership Project (3GPP). The LTE project improves and enhances the radio access technology of 3G, and uses the Orthogonal Frequency Division Multiplexing (OFDM) and Multiple Input Multiple Output (MIMO) as its wireless network evolution standard. Since the OFDM technology is used, all carriers are mutually orthogonal, the intra cell interference can be basically eliminated, but the inter cell interference will affect the quality of service for the edge users, which becomes one of the important factors affecting the whole system development. Therefore, the inter cell interference problem based on an OFDM system becomes a hotspot that has been researched in recent years, and the Inter Cell Interference Coordination (ICIC) technology is widespread concerned therein. The ICIC technology limits the allocation of radio resources and power in each cell by means of inter cell coordination, which achieves the purpose of reducing the inter cell edge user interference and improving the throughput. The method includes coordinately using resources in a time domain, a frequency domain and an air domain, or limiting transmitted power in certain resources or the like. The inter cell interference coordination in the Release 8/9 is mainly focused on the frequency domain, such as partial frequency reuse and soft frequency reuse and so on, and the inter cell interference coordination may also be combined with power control, all these schemes aim at solving the interference between base stations, that is, all these schemes are implemented in a so-called homogeneous network. However, with the development of the network, researches show that 80% of traffic will all be generated by a heterogeneous network in the future, the heterogeneous network is a heterogeneous system with different node types in the same coverage which are formed by deploying a plurality of small power transmission nodes again within a coverage area of the traditional macro cellular mobile base station. In the homogeneous network structure, since the interference problem in the heterogeneous network interference scenario cannot be solved with the ICIC scheme in the Release 8/9, the inter cell interference coordination in the Release 10 mainly aims at coordinating the interference between macro base stations in the heterogeneous network and low power nodes within the coverage of the macro base stations, thus the Release 10 introduces the enhanced inter cell interference coordination (eICIC) technology to solve the interference coordination problem between the macro base station and the micro base station, and an almost blank subframe (ABS) is an important technique in the eICIC, herein a physical downlink control channel (PDCCH) is required to be sent in each subframe, and a Physical Downlink Shared Channel (PDSCH) of an interference source cell may severely interfere a PDCCH of an interfered cell, so that the user of the interfered cell cannot maintain a normal call. The 3GPP specifies that the ABS mode is used to avoid the interference of the interfering cell to the PDCCH and PDSCH of the UE (user terminal) of the interfered cell.

The 3GPP protocol specified the configuration restrictions on the ABS subframes: an ABS Pattern period of the Frequency Division Duplexing (FDD) is 40ms; an ABS Pattern period of the Time Division Duplexing (TDD) with proportion of 1 and 2 is 20ms, and a start frame number of the ABS pattern period starts from SFN=0. Since a System Frame Number (SFN) is a system frame number self-maintained by each macro base station and micro base station in the heterogeneous network, it is very difficult to synchronize the ABSs of the macro base station and micro base station.

Summary of the Invention

The technical problem required to be solved in the embodiments of the present invention is to provide a method, device and base station for processing an ABS in an LTE heterogeneous network, to realize ABS synchronization of a macro base station and a micro base station.

In order to solve the above technical problem, the embodiment of the present invention provides a method for processing an almost blank subframe (ABS) in a long term evolution heterogeneous network, which comprises:

determining a system frame number deviation between a present base station and a base station configuring the ABS; and

adjusting an ABS effective time issued by the base station configuring the ABS according to the system frame number deviation.

Preferably, the above method further includes the following feature: said determining a system frame number deviation (DeltaSFN) between a present base station and a base station configuring the ABS is implemented through the following formula:

$$DeltaSFN=(SFN1-SFN2+1024) \bmod 1024,$$

herein,
SFN1 is a system frame number of the present base station at a specified moment, and SFN2 is a system frame number of the base station configuring the ABS at the specified moment.

Preferably, the above method further includes the following feature: said adjusting an ABS effective time issued by the base station configuring the ABS according to the system frame number deviation is implemented through the following formula:

$$T=T1+DeltaSFN,$$

herein, T is an ABS effective time, and T1 is a configured ABS effective time.

In order to solve the above problem, the embodiment of the present invention further provides a device for processing an almost blank subframe (ABS) in a long term evolution heterogeneous network, which is installed in a base station, and comprises:

a determination module, configured to determine a system frame number deviation between a present base station and a base station configuring the ABS; and

an adjustment module, configured to adjust an ABS effective time issued by the base station configuring the ABS according to the system frame number deviation.

Preferably, the above device further includes the following feature:

the determination module being configured to determine a system frame number deviation (DeltaSFN) between a present base station and a base station configuring the ABS is implemented through the following formula: DeltaSFN=(SFN1-SFN2+1024) mod 1024, herein, SFN1 is a system frame number of the present base station at a specified moment, and SFN2 is a system frame number of the base station configuring the ABS at the specified moment.

Preferably, the above device further includes the following feature:

the adjustment module being configured to adjust an ABS effective time issued by the base station configuring the ABS according to the system frame number deviation is implemented through the following formula: T=T1+ DeltaSFN, herein, T is an ABS effective time, and T1 is a configured ABS effective time.

In order to solve the above problem, the embodiment of the present invention further provides a base station, which comprises a device for processing an almost blank subframe (ABS) in a long term evolution heterogeneous network, herein, the device is installed in the base station, and the device comprises:

a determination module, configured to determine a system frame number deviation between the present base station and a base station configuring the ABS; and

an adjustment module, configured to adjust an ABS effective time issued by the base station configuring the ABS according to the system frame number deviation.

Preferably, the above base station further includes the following feature:

the determination module being configured to determine a system frame number deviation (DeltaSFN) between the present base station and a base station configuring the ABS is implemented through the following formula:

$$\mathrm{DeltaSFN}=(\mathrm{SFN1}-\mathrm{SFN2}+1024) \bmod 1024, \text{ herein, SFN1 is a system frame number of}$$

herein, SFN1 is a system frame number of the present base station at a specified moment, and SFN2 is a system frame number of the base station configuring the ABS at the specified moment.

Preferably, the above base station further includes the following feature:

the adjustment module being configured to adjust an ABS effective time issued by the base station configuring the ABS according to the system frame number deviation is implemented through the following formula: T=T1+ DeltaSFN, herein, T is an ABS effective time, and T1 is a configured ABS effective time.

In conclusion, the embodiments of the present invention provide a method and device for processing the ABS in the LTE heterogeneous network, which can realize the ABS synchronization of the macro base station and the micro base station.

Brief Description of Drawings

FIG. 1 is a flow chart of a method for processing an ABS in an LTE heterogeneous network in the embodiment of the present invention;

FIG. 2 is a schematic diagram of ABS effectiveness when an SFN of the base station configuring the ABS subframe and an SFN of the base station receiving the ABS subframe are synchronous in the embodiment of the present invention;

FIG. 3 is a schematic diagram of adjusting an ABS effective moment according to an SFN deviation in the embodiment of the present invention;

FIG. 4 is a device for processing an ABS in an LTE heterogeneous network in the embodiment of the present invention;

FIG. 5 is a base station for processing an ABS in an LTE heterogeneous network in the embodiment of the present invention.

Preferred Embodiments of the Invention

The embodiments of the present invention will be described in detail in combination with the accompanying drawings below. The embodiments in the present invention and the characteristics in the embodiments may be arbitrarily combined with each other in the case of no conflict.

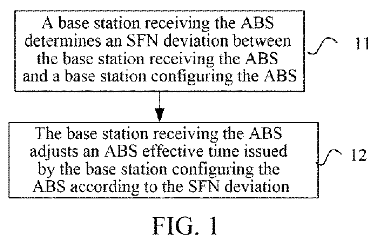

FIG. 1 is a flow chart of a method for processing an ABS in an LTE heterogeneous network in the embodiment of the present invention, and as shown in FIG. 1, the method of the embodiment includes:

In step 11, a base station receiving the ABS determines an SFN deviation between the base station receiving the ABS and a base station configuring the ABS;

In step 12, the base station receiving the ABS adjusts an ABS effective time issued by the base station configuring the ABS according to the SFN deviation.

Compared with the related art, the embodiment can provide a strict ABS effective time of the macro base station and micro base station. At present, the protocol has not compulsively specified an SFN synchronization mechanism between a macro base station and a micro base station, and a Global Positioning System (GPS), the Institute of Electrical and Electronics Engineers (IEEE) 1588 and air interface synchronization may be used, herein the macro base station and the micro base station are likely to be provided by different manufacturers during networking the heterogeneous network, and the synchronization technologies adopted by the macro base station and the micro base station are different, it may cause that the system frame number SFN of the macro base station and the system frame number SFN of the micro base station are not completely aligned, and the ABS is configured based on the SFN, thus the case in which ABS is inconsistent with the anticipated configuration will appear, and more severely, as a result, an overlap occurs between the anticipated ABS scheduling data of the micro base station and the ABS scheduling data of the macro base station, which affects the system capacity and user experience. With the method of the embodiment of the present invention, an ABS effective time of the base station receiving the ABS is adjusted according to different system subframe number deviations of the base station configuring the ABS and the base station receiving the ABS, so that the moment when the base station receiving the ABS is scheduling the ABS subframe is completely staggered from the scheduling time of the base station configuring the ABS, which realizes the anticipated eICIC function.

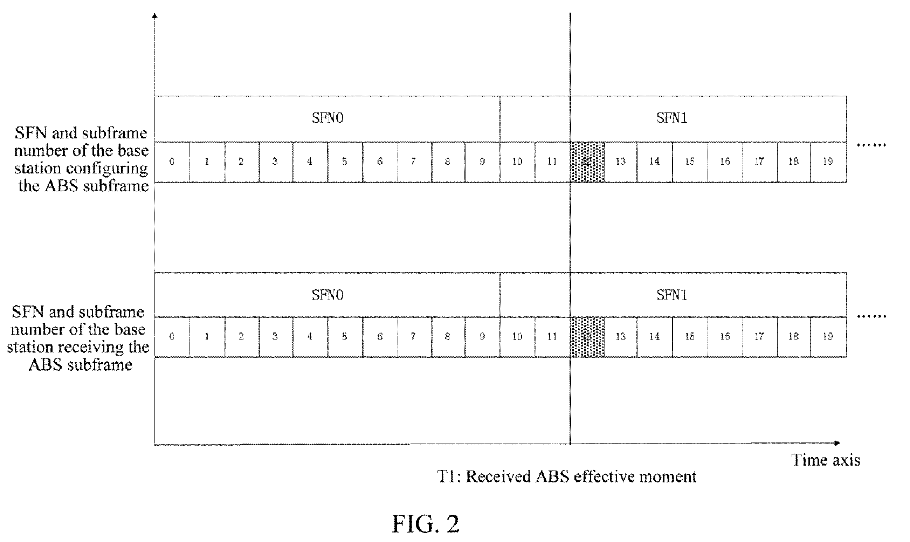

FIG. 2 is a schematic diagram of ABS effectiveness when an SFN of the base station configuring the ABS subframe and an SFN of the base station receiving the ABS subframe are synchronous in the embodiment of the present invention:

The base station configuring the ABS notifies the base station receiving the ABS that a subframe with a 12th number of SFN=1 thereof is an ABS. When the SFN of the base station configuring the ABS subframe and the SFN of the base station receiving the ABS subframe are synchronous, the base station receiving the ABS subframe considers that the subframe with the 12th number of SFN=1 is the ABS, and performs corresponding scheduling on the subframe.

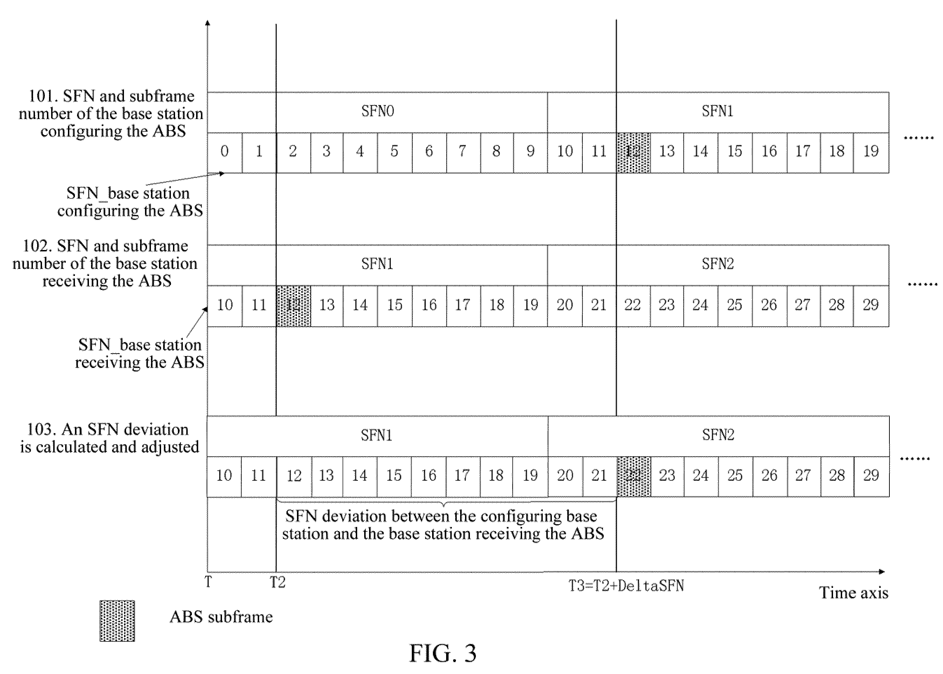

FIG. 3 is a schematic diagram of adjusting an ABS effective moment according to an SFN deviation in the embodiment of the present invention, and the following steps are included:

In step 101, the base station configuring the ABS configures that a subframe with a 12th number of the SFN1 at a T1 moment is an ABS;

In step 102, the base station receiving the ABS receives an ABS indication of the base station configuring the ABS;

In step 103, the SFN of the base station configuring the ABS is an SFN_base station configuring the ABS at the T moment; the SFN of the base station receiving the ABS is an SFN_base station receiving the ABS at the T moment, the base station receiving the ABS calculates an SFN deviation between the base station receiving the ABS and the base station configuring the ABS and winds to calculate: DeltaSFN=(SFN_base station receiving the ABS-SFN_base station configuring the ABS+1024) mod 1024, and
the ABS effective time of the base station receiving the ABS is adjusted as: T_configured ABS effective moment+DeltaSFN, and as shown in the figure, the ABS of the base station receiving the ABS and the base station configuring the ABS are alignment in time on the configured ABS at a T2 moment.

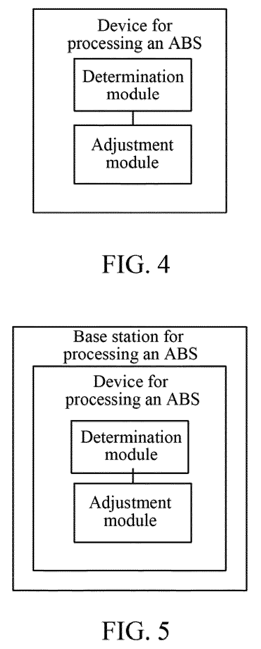

FIG. 4 is a device for processing an ABS in an LTE heterogeneous network in the embodiment of the present invention, and the device is installed in a base station, and includes the following modules:

a determination module, configured to determine a system frame number deviation between the present base station and a base station configuring the ABS; and

an adjustment module, configured to adjust an ABS effective time issued by the base station configuring the ABS according to the system frame number deviation.

Herein, the determination module being configured to determine a system frame number deviation (DeltaSFN) between the present base station and a base station configuring the ABS may be implemented through the following formula: DeltaSFN=(SFN1-SFN2+1024) mod 1024, herein, SFN1 is a system frame number of the present base station at a specified moment, and SFN2 is a system frame number of the base station configuring the ABS at the specified moment.

The adjustment module being configured to adjust an ABS effective time issued by the base station configuring the ABS according to the system frame number deviation may be implemented through the following formula: T=T1+DeltaSFN, herein, T is the ABS effective time, and T1 is a configured ABS effective time.

The device of the embodiment is installed in the base station.

The ordinary person skilled in the art can understand that all or part of the steps in the above method can be completed by a program instructing related hardware, and the program can be stored in a computer readable memory medium, such as a read-only memory, magnetic disk or optical disk and so on. Alternatively, all or part of the steps of the above embodiments also can be implemented by using one or multiple integrated circuits. Correspondingly, each module/unit in the above examples can be implemented in a form of hardware, and also can be implemented in a form of software function module. The embodiments of the present invention are not limited to any combination of hardware and software in a specific form.

The above description is only the preferred embodiments of the present invention. Certainly, the present invention may still have other various embodiments, the skilled people skilled in the art can make one or more corresponding changes and modifications according to the embodiments of the present invention without departing from the rule and essence of the embodiments of the present invention, and these corresponding changes and modifications shall all fall into the protection scope of the appended claims of the embodiments of the present invention.

Industrial Applicability

The embodiments of the present invention provide a method and device for processing an ABS in an LTE heterogeneous network, which can realize ABS synchronization of a macro base station and a micro base station.

**Claims**

1. A method for processing an almost blank subframe (ABS) in a long term evolution heterogeneous network, comprising:

   determining a system frame number deviation between a present base station and a base station configuring the ABS; and
   adjusting an ABS effective time issued by the base station configuring the ABS according to the system frame number deviation.

2. The method of claim 1, wherein, said determining a system frame number deviation (DeltaSFN) between a present base station and a base station configuring the ABS is implemented through the following formula:

$$DeltaSFN = (SFN1 - SFN2 + 1024) \bmod 1024, \text{ wherein,}$$

   wherein,
   SFN1 is a system frame number of the present base station at a specified moment, and SFN2 is a system frame number of the base station configuring the ABS at the specified moment.

3. The method of claim 2, wherein, said adjusting an ABS effective time issued by the base station configuring the ABS according to the system frame number deviation is implemented through the following formula:

$$T = T1 + DeltaSFN,$$

   wherein, T is an ABS effective time, and T1 is a configured ABS effective time.

4. A device for processing an almost blank subframe (ABS) in a long term evolution heterogeneous network, wherein, the device is installed in a base station, and comprises:

   a determination module, configured to determine a system frame number deviation between a present base station and a base station configuring the ABS; and
   an adjustment module, configured to adjust an ABS effective time issued by the base station configuring the ABS according to the system frame number deviation.

5. The device of claim 4, wherein:

   the determination module being configured to determine a system frame number deviation (DeltaSFN) between a present base station and a base station configuring the ABS is implemented through the following formula: DeltaSFN=(SFN1-SFN2+1024) mod 1024, wherein, SFN1 is a system frame number of the present base station at a specified moment, and SFN2 is a system frame number of the base station configuring the ABS at the specified moment.

6. The device of claim 5, wherein:

   the adjustment module being configured to adjust an ABS effective time issued by the base station configuring the ABS according to the system frame number deviation is implemented through the following formula: T=T1+ DeltaSFN, wherein, T is an ABS effective time, and T1 is a configured ABS effective time.

7. A base station, comprising a device for processing an almost blank subframe (ABS) in a long term evolution heterogeneous network, wherein, the device is installed in the base station, and the device comprises:

   a determination module, configured to determine a system frame number deviation between the present base station and a base station configuring the ABS; and
   an adjustment module, configured to adjust an ABS effective time issued by the base station configuring the ABS according to the system frame number deviation.

8. The base station of claim 7, wherein:

   the determination module being configured to determine a system frame number deviation (DeltaSFN) between the present base station and a base station configuring the ABS is implemented through the following formula:

   $$DeltaSFN = (SFN1 - SFN2 + 1024) \bmod 1024, \text{ wherein, SFN1 is a system frame number}$$

   wherein, SFN1 is a system frame number of the present base station at a specified moment, and SFN2 is a system frame number of the base station configuring the ABS at the specified moment.

9. The base station of claim 8, wherein:

   the adjustment module being configured to adjust an ABS effective time issued by the base station configuring the ABS according to the system frame number deviation is implemented through the following formula: T=T1+ DeltaSFN, wherein, T is an ABS effective time, and T1 is a configured ABS effective time.

A base station receiving the ABS determines an SFN deviation between the base station receiving the ABS and a base station configuring the ABS

11

The base station receiving the ABS adjusts an ABS effective time issued by the base station configuring the ABS according to the SFN deviation

12

FIG. 1

FIG. 2

T1: Received ABS effective moment

Time axis

SFN and subframe number of the base station configuring the ABS subframe

SFN and subframe number of the base station receiving the ABS subframe

EP 3 086 613 A1

FIG. 3

EP 3 086 613 A1

Device for
processing an ABS

Determination
module

Adjustment
module

FIG. 4

Base station for
processing an ABS

Device for
processing an ABS

Determination
module

Adjustment
module

FIG. 5

**EP 3 086 613 A1**

# INTERNATIONAL SEARCH REPORT

| International application No. |
|---|
| PCT/CN2014/078172 |

### A. CLASSIFICATION OF SUBJECT MATTER

H04W 72/04 (2009.01) i

According to International Patent Classification (IPC) or to both national classification and IPC

### B. FIELDS SEARCHED

Minimum documentation searched (classification system followed by classification symbols)

IPC: H04W; H04Q; H04L

Documentation searched other than minimum documentation to the extent that such documents are included in the fields searched

Electronic data base consulted during the international search (name of data base and, where practicable, search terms used)

CNTXT, CNABS, VEN: ABS, SFN, blank sub frame, system sub frame, system frame, effect+, original+, sync+, offset, dispersion, interfere+, disturb+

### C. DOCUMENTS CONSIDERED TO BE RELEVANT

| Category* | Citation of document, with indication, where appropriate, of the relevant passages | Relevant to claim No. |
|---|---|---|
| X | CN 102136863 A (DATANG MOBILE COMMUNICATION EQUIP CO., LTD.) 27 July 2011 (27.07.2011) description, paragraphs [0073] to [0238] and figures 4 to 16 | 1-9 |
| X | CN 102045850 A (DATANG MOBILE COMMUNICATION EQUIP CO., LTD.) 04 May 2011 (04.05.2011) description, paragraphs [0051] to [0129] and figures 5 to 10 | 1-9 |
| A | WO 2013062456 A1 (TELEFONAKTIEBOLAGET ERICSSON L M) 02 May 2013 (02.05.2013) the whole document | 1-9 |
| A | EP 1983786 A1 (NOKIA SIEMENS NETWORKS OY) 22 October 2008 (22.10.2008) the whole document | 1-9 |
| A | EP 1227602 A1 (LUCENT TECHNOLOGIES INC.) 31 July 2002 (31.07.2002) the whole document | 1-9 |

☐ Further documents are listed in the continuation of Box C.     ☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 07 August 2014 | 17 September 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HUANG, Yiling<br><br>Telephone No. (86-10) 62089134 |

Form PCT/ISA/210 (second sheet) (July 2009)

**INTERNATIONAL SEARCH REPORT**
Information on patent family members

| | International application No. |
| --- | --- |
| | PCT/CN2014/078172 |

| Patent Documents referred in the Report | Publication Date | Patent Family | Publication Date |
| --- | --- | --- | --- |
| CN 102136863 A | 27 July 2011 | None | |
| CN 102045850 A | 04 May 2011 | None | |
| WO 2013062456 A1 | 02 May 2013 | None | |
| EP 1983786 A1 | 22 October 2008 | WO 2008125453 A1 | 23 October 2008 |
| | | EP 1983786 B1 | 28 May 2014 |
| EP 1227602 A1 | 31 July 2002 | US 2002097689 A1 | 25 July 2002 |
| | | KR 20020062815 A1 | 31 July 2002 |
| | | CA 2366426 A1 | 24 July 2002 |
| | | JP 2003219481 A | 31 July 2003 |

Form PCT/ISA /210 (patent family annex) (July 2009)